# EUROPEAN PATENT APPLICATION

(11) **EP 4 030 412 A1**
(43) Date of publication of application: **20.07.2022**
(21) Application number: 19945307.7
(22) Date of filing: 26.09.2019
(51) Int. Cl.: G09F 11/02, G09F 13/22

(54) **ROTATING DISPLAY APPARATUS USING SEMICONDUCTOR LIGHT EMITTING DEVICE**

(30) Priority: 11.09.2019 KR 20190113172
(71) Applicant: LG Electronics Inc., SEOUL 07336 (KR)
(72) Inventor: LEE, Sungwhan, Seoul 08592 (KR)
(74) Representative: Vossius & Partner Patentanwälte Rechtsanwälte mbB
(86) International application number: PCT/KR2019/012519
(87) International publication number: WO 2021/049699

(57) **Abstract**

The present disclosure is applicable to a display apparatus-related technology field, and relates to, for example, a rotating display apparatus using a light emitting diode (LED), which is a semiconductor light emitting device. According to the present disclosure, a rotating display apparatus using a light emitting device comprises: a stationary part including a motor; a rotary part located on the stationary part and rotated by the motor; a first light source module which includes at least one bar-shaped panel coupled to the rotary part and radially arranged, and a first light emitting device array arranged in the longitudinal direction on each panel; and a second light source module including a center panel located on the inner side of the first light source module, and a second light emitting device array arranged on the center panel, wherein the arrangement direction of the first light emitting device array can be different from the arrangement direction of the second light emitting device array.

## Description

### TECHNICAL FIELD

The present disclosure is applicable to display-device-related technical fields, and relates to a rotatable display device using a light-emitting diode (LED), which is a semiconductor light-emitting element.

### BACKGROUND ART

Recently, in the field of display technology, display devices having excellent characteristics, such as thinness and flexibility, have been developed. Meanwhile, currently commercialized major displays are represented by a liquid crystal display (LCD) and an organic light-emitting diode (OLED).

However, the LCD has problems in which the response time is slow and it is difficult to realize flexibility, and the OLED has problems in which the lifespan thereof is short and the production yield thereof is low.

Meanwhile, a light-emitting diode (LED), which is a well-known semiconductor light-emitting element that converts current into light, has been used as a light source for displaying an image in electronic devices including information communication devices together with a GaP:N-based green LED, starting with commercialization of a red LED using a GaAsP compound semiconductor in 1962. Therefore, a method of solving the above-described problems by implementing a display using the semiconductor light-emitting element may be proposed. Such a light-emitting diode has various advantages, such as a long lifespan, low power consumption, excellent initial driving characteristics, and high vibration resistance, compared to a filament-based light-emitting element.

Meanwhile, when a light-emitting module in which light-emitting elements are arranged in one dimension is rotated and driven at a high speed according to the angle thereof, various letters, graphics, and videos may be recognized by a human due to an afterimage effect.

In general, when still images are continuously displayed at a rate of 24 or more sheets per second, a viewer recognizes the same as a video. A conventional image display device, such as a CRT, an LCD, or a PDP, displays still images at a rate of 30 to 60 frames per second, so a viewer is capable of recognizing the same as a video. As the number of still images displayed per second increases, a viewer may experience smoother video, and as the number of still images displayed per second decreases, it becomes difficult to implement smooth video.

A rotatable display device includes a plurality of light source modules, and it is necessary to secure space having a certain size in order to mechanically assemble the light source modules.

This space may include space formed when attaching light sources (LED chips, LED packages, or the like) to a panel. In addition, it is necessary to secure space required for a task between the outer periphery of a printed circuit board (panel) and light sources. That is, minimum space required for mounting of LEDs onto the printed circuit board is necessary. In addition, space may be formed by assembly of the light source modules.

For this reason, a dead zone having a certain size, in which no image is displayed, may be present at the center point of the rotatable display device.

Even if a separate light source module is provided at the center in order to prevent the generation of a dead zone at the center point, a dead zone may be generated due to an inevitable gap between the light source module provided at the center and the surrounding light source module.

Therefore, there is a need for a method of preventing the generation of a dead zone in a rotatable display device.

### DISCLOSURE

### TECHNICAL TASK

A technical task of the present disclosure is to provide a rotatable display device using a semiconductor light-emitting element, which is capable of eliminating a dead zone having a certain size, in which no image is displayed.

### TECHNICAL SOLUTIONS

In accordance with a first aspect for accomplishing the above object, a rotatable display device using a light-emitting element of the present disclosure may include a fixed unit including a motor, a rotary unit located on the fixed unit and configured to be rotated by the motor, a first light source module including one or more bar-shaped panels coupled to the rotary unit and disposed radially and first light-emitting element arrays respectively disposed on the panels in the longitudinal direction of the panels, and a second light source module including a center panel located inwards further than the first light source module and second light-emitting element arrays disposed on the center panel. The first light-emitting element arrays may be disposed in different directions from the second light-emitting element arrays.

In addition, each of the second light-emitting element arrays may be located between two adjacent ones of the first light-emitting element arrays.

In addition, each of the second light-emitting element arrays may be located at a position corresponding to half the angle between two adjacent ones of the first light-emitting element arrays.

In addition, the second light-emitting element arrays may be provided in a number corresponding to the number of first light-emitting element arrays.

In addition, each of the second light-emitting element arrays may have a length corresponding to the distance between the center of the rotary unit and each of the first light-emitting element arrays.

In addition, the fixed unit and the rotary unit may be electrically connected to each other through a wireless power transfer structure.

In addition, the wireless power transfer structure may include a wireless power transmitter provided at the fixed unit, a transmission coil connected to the wireless power transmitter, a reception coil located at a position facing the transmission coil, and a wireless power receiver connected to the reception coil.

In addition, the first light source module and the second light source module may include drivers configured to drive the first light source module and the second light source module.

In addition, the drivers may be provided on surfaces of the panels so as to be located opposite the first light-emitting element arrays and the second light-emitting element arrays.

In addition, an image processor configured to transmit control signals to the drivers may be further included.

In addition, the image processor may transmit signals controlling the first light-emitting element arrays and the second light-emitting element arrays to display image data of a specific frame in a delayed manner.

In addition, the image processor may transmit signals controlling the first light-emitting element arrays and the second light-emitting element arrays to be sequentially driven.

In accordance with a first aspect for accomplishing the above object, a rotatable display device using a light-emitting element of the present disclosure may include a fixed unit including a motor, a rotary unit located on the fixed unit and configured to be rotated by the motor, a first light source module including one or more bar-shaped panels coupled to the rotary unit and disposed radially and first light-emitting element arrays respectively disposed on the panels in the longitudinal direction of the panels, and a second light source module including a center panel located inwards further than the first light source module and second light-emitting element arrays disposed on the center panel. The second light-emitting element arrays may be disposed so as to be misaligned at a predetermined angle from the first light-emitting element arrays.

In addition, the predetermined angle may correspond to half the angle between two adjacent ones of the first light-emitting element arrays.

### ADVANTAGEOUS EFFECTS

According to an embodiment of the present disclosure, the above-described problems may be solved.

That is, a dead zone having a certain size, in which no image is displayed, may be eliminated from the rotatable display device.

In addition, according to the present disclosure, an additional light source module (the second light source module) is disposed at the center of the rotatable display device, and light sources are disposed in specific directions in this light source module, thereby preventing the generation of a dead zone at the center of the light source module and preventing disconnection between pixels at a connection portion of the light source module.

Further, according to the present disclosure, there are additional technical effects not mentioned herein, and those skilled in the art can understand the effects through the specification and the drawings.

### DESCRIPTION OF DRAWINGS

FIG. 1 is a perspective view of a rotatable display device according to a first embodiment of the present disclosure.
FIG. 2 is a side sectional view of the rotatable display device according to the first embodiment of the present disclosure.
FIG. 3 is a perspective view showing the front surface of a light source module according to the first embodiment of the present disclosure.
FIG. 4 is a perspective view showing the rear surface of the light source module according to the first embodiment of the present disclosure.
FIG. 5 is an enlarged view of portion A in FIG. 3.
FIG. 6 is a cross-sectional view of the light source module according to the first embodiment of the present disclosure.
FIG. 7 is a block diagram of the rotatable display device according to the first embodiment of the present disclosure.
FIG. 8 is a plan view of a light source module of a rotatable display device according to a second embodiment of the present disclosure.
FIG. 9 is an enlarged view of portion B in FIG. 8.
FIG. 10 is a plan view of a light source module of a rotatable display device according to a third embodiment of the present disclosure.
FIG. 11 is an enlarged view of the center portion in FIG. 10.
FIG. 12 is a plan view of the light source module of the rotatable display device according to the first embodiment of the present disclosure.
FIG. 13 is a timing chart showing the timing at which light-emitting modules are driven in the third embodiment of the present disclosure.
FIG. 14 is a timing chart showing the timing at which light-emitting modules are driven in the first embodiment of the present disclosure.

### BEST MODE FOR DISCLOSURE

Reference will now be made in detail to embodiments of the present disclosure, examples of which are illustrated in the accompanying drawings. Wherever possible, the same reference numbers will be used throughout the drawings to refer to the same or like parts, and a redundant description thereof will be omitted. As used herein, the suffixes "module" and "unit" are added or used interchangeably to facilitate preparation of this specification, and are not intended to suggest distinct meanings or functions. In describing embodiments disclosed in this specification, relevant well-known technologies may not be described in detail in order to avoid obscuring the subject matter of the embodiments disclosed in this specification. In addition, it should be noted that the accompanying drawings are only for easy understanding of the embodiments disclosed in the present specification, and should not be construed as limiting the technical spirit disclosed in the present specification.

Furthermore, although the drawings are separately described for simplicity, embodiments implemented by combining two or more drawings are also within the scope of the present disclosure.

In addition, when an element such as a layer, a region, or a substrate is described as being "on" another element, it is to be understood that the element may be directly on the other element, or there may be an intermediate element between them.

The display device described herein conceptually includes all display devices that display information with a unit pixel or a set of unit pixels. Therefore, the term "display device" may be applied not only to finished products but also to parts. For example, a panel corresponding to a part of a digital TV also independently corresponds to the display device in the present specification. Such finished products include a mobile phone, a smartphone, a laptop computer, a digital broadcasting terminal, a personal digital assistant (PDA), a portable multimedia player (PMP), a navigation system, a slate PC, a tablet PC, an Ultrabook, a digital TV, a desktop computer, and the like.

However, it will be readily apparent to those skilled in the art that the configuration according to the embodiments described herein is also applicable to new products to be developed later as display devices.

In addition, the term "semiconductor light-emitting element" mentioned in this specification conceptually includes an LED, a micro LED, and the like, and may be used interchangeably therewith.

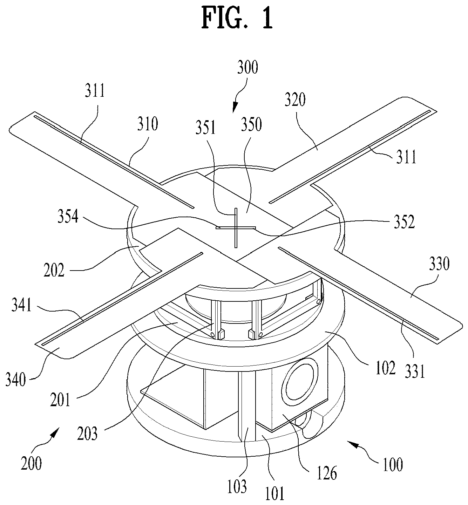

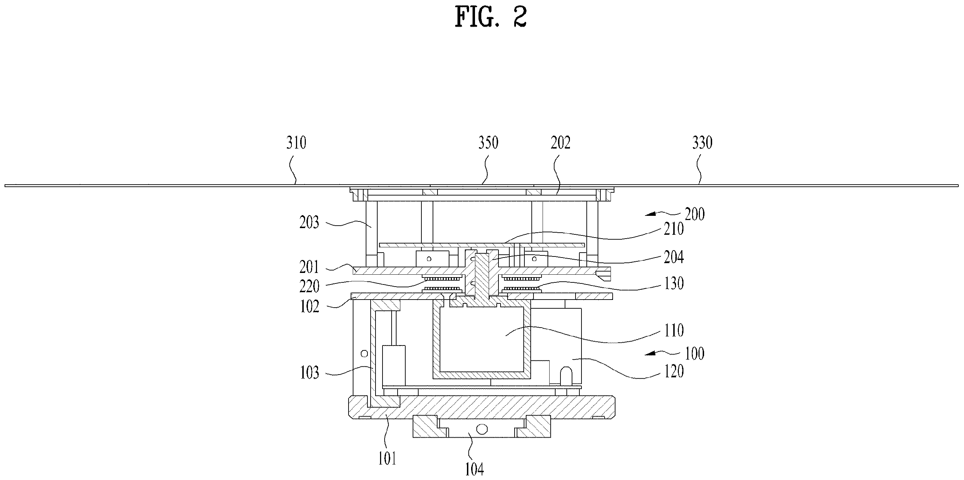

FIG. 1 is a perspective view of a rotatable display device according to a first embodiment of the present disclosure. In addition, FIG. 2 is a side sectional view of the rotatable display device according to the first embodiment of the present disclosure.

FIG. 1 illustrates a rotatable display device in which light-emitting element arrays 311, 321, 331, and 341 are respectively provided on blade-type panels 310, 320, 330, and 340 in the longitudinal direction of each of the panels.

Such a rotatable display device may broadly include a fixed unit 100, which includes a motor 110, a rotary unit 200, which is located on the fixed unit 100 and is rotated by the motor 110, and a light source module 300, which is coupled to the rotary unit 200 and includes light-emitting element arrays 311, 321, 331, 341, 351, 352, 353, and 354 so as to be implemented as a display by creating an afterimage resulting from rotation.

In this case, the light source module 300 may include a first light source module 301, which is implemented as one or more bar-shaped panels 310, 320, 330, and 340, which are disposed radially, and a second light source module 302, which is located between the first light source module 301 and the center of rotation of the rotary unit 200.

Referring to FIG. 1, the first light source module 301 may include four panels 310, 320, 330, and 340, on which the light-emitting element arrays 311, 321, 331, and 341 are provided. However, this is given merely by way of example, and the first light source module 301 may include one or more panels.

The direction in which the first light-emitting element arrays 311, 321, 331, and 341 are disposed may differ from the direction in which the second light-emitting element arrays 351, 352, 353, and 354 are disposed.

That is, as illustrated, the first light source module 301 may include one or more bar-shaped panels 310, 320, 330, and 340, which are disposed radially around the center of rotation, and first light-emitting element arrays 311, 321, 331, and 341, which are respectively disposed on the panels 310, 320, 330, and 340 in the longitudinal direction of each panel.

In addition, the second light source module 302 may include a center panel 350, which is located inwards further than the first light source module 301, and second light-emitting element arrays 351, 352, 353, and 354, which are disposed on the center panel 350.

In this case, the direction in which the second light-emitting element arrays 351, 352, 353, and 354 are disposed may be misaligned at a predetermined angle from the direction in which the first light-emitting element arrays 311, 321, 331, and 341 are disposed based on the center of rotation.

Each of the panels constituting the light source module 300 may be configured as a printed circuit board (PCB). That is, each panel may have the function of a printed circuit board. Each of the light-emitting element arrays may be implemented as an individual unit pixel, and may be disposed on a corresponding one of the panels in the longitudinal direction of the panel.

The panels provided with the light-emitting element arrays may be implemented as a display using an afterimage created by rotation thereof. Implementation of a display using an afterimage will be described later in detail.

In the above manner, the first light source module 301 may be constituted by the panels 310, 320, 330, and 340, on which the light-emitting element arrays 311, 321, 331, and 341 are disposed.

As described above, the first light source module 301 may be constituted by a plurality of panels 310, 320, 330, and 340. However, the first light source module 301 may be constituted by a single panel provided with a light-emitting element array. When the first light source module 301 is constituted by a plurality of panels, as illustrated in FIG. 1, the plurality of panels may realize one frame image in a sharing manner, and may thus be rotated at a lower speed when realizing a given frame image.

Meanwhile, the fixed unit 100 may include frame structures 101, 102, and 103. That is, the fixed unit 100 may include a lower frame 101, an upper frame 102, and a connection frame 103, which connects the lower frame 101 and the upper frame 102 to each other.

These frame structures 101, 102, and 103 may provide a space in which the motor 110 is mounted, and may further provide a space in which a power supply 120 and an RF module 126 are mounted.

In addition, a weight (not shown) may be mounted to the fixed unit 100 in order to reduce the influence of high-speed rotation of the rotary unit 200.

Similarly, the rotary unit 200 may include frame structures 201, 202, and 203. That is, the rotary unit 200 may include a lower frame 201, an upper frame 202, and a connection frame 203, which connects the lower frame 201 and the upper frame 202 to each other.

These frame structures 201, 202, and 203 may provide a space in which a driving circuit 210 for driving the light-emitting element arrays 311, 321, 331, 341, 351, 352, 353, and 354 in order to implement a display is mounted.

In this case, the driving shaft of the motor 110 may be fixed to a shaft-fixing portion 204 formed at the lower frame 201 of the rotary unit 200. In this way, the driving shaft of the motor 110 and the center of rotation of the rotary unit 200 may be coaxially located.

Further, the light source module 300 may be fixedly mounted on the frame structures 201, 202, and 203.

Meanwhile, the fixed unit 100 and the rotary unit 200 may transfer power therebetween in a wireless power transfer manner. To this end, a transmission coil 130 for transferring wireless power may be mounted to an upper portion of the fixed unit 100, and a reception coil 220 may be mounted to a lower portion of the rotary unit 200 so as to be located at a position facing the transmission coil 130.

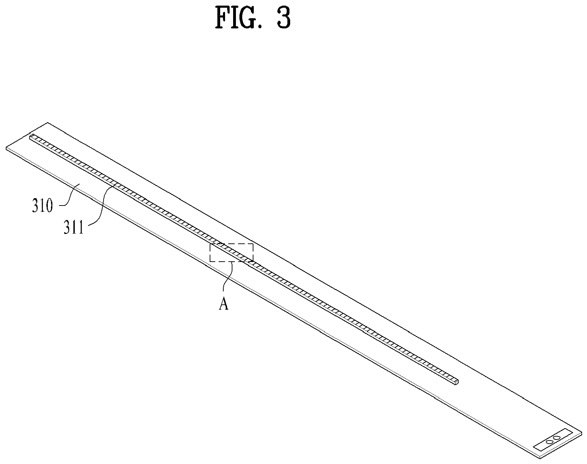

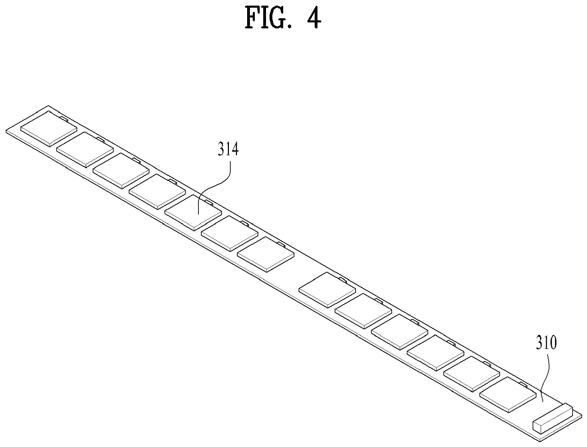

FIG. 3 is a perspective view showing the front surface of a light source module according to the first embodiment of the present disclosure, and FIG. 4 is a perspective view showing the rear surface of the light source module according to the first embodiment of the present disclosure.

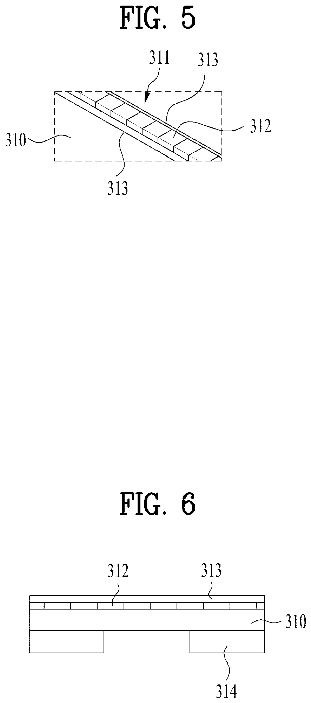

FIG. 3 illustrates one panel 310 forming the first light source module 301. As mentioned above, the panel 310 may be a printed circuit board (PCB). A plurality of light-emitting elements 312 (refer to FIG. 5) may be mounted on the panel 310 so as to be disposed in one direction to form pixels, thereby constituting the light-emitting element array 311. Here, a light-emitting diode (LED) may be used as the light-emitting element.

That is, the light-emitting elements 312 are disposed in one direction on one panel 310 to form individual pixels, with the result that the light-emitting element array 311 may be provided so as to be linearly mounted.

FIG. 4 illustrates the rear surface of the panel 310. Drivers 314 for driving the light-emitting elements 312 may be mounted on the rear surface of the panel 310, which constitutes the light source module.

Since the drivers 314 are mounted on the rear surface of the panel 310, as described above, the drivers 314 may not interfere with a light-emitting surface, the influence on light emission from the light sources (the light-emitting elements) 312 due to interference may be minimized, and the area of the panel 310 may be minimized. The panel 310, having a small area, may improve the transparency of the display.

Meanwhile, the front surface of the panel 310, on which the light-emitting element array 311 is mounted, may be processed into a dark color (e.g. black) in order to improve the contrast ratio and the color expression of the display, thereby maximizing the effect of the light sources.

FIG. 5 is an enlarged view of portion A in FIG. 3, and FIG. 6 is a cross-sectional view of the light source module according to the first embodiment of the present disclosure.

Referring to FIG. 5, it can be seen that the individual light-emitting elements 312 are mounted linearly in one direction (the longitudinal direction of the panel). In this case, a protective portion 313 may be located outside the light-emitting elements 312 in order to protect the light-emitting elements 312.

Red, green, and blue light-emitting elements 312 may form one pixel in order to realize natural colors, and the individual pixels may be mounted in one direction on the panel 310.

Referring to FIG. 6, the light-emitting elements 312 may be protected by the protective portion 313. Further, as described above, the drivers 314 may be mounted on the rear surface of the panel 310, and may drive the light-emitting elements 312 in units of pixels or subpixels. In this case, one driver 314 may individually drive at least one pixel.

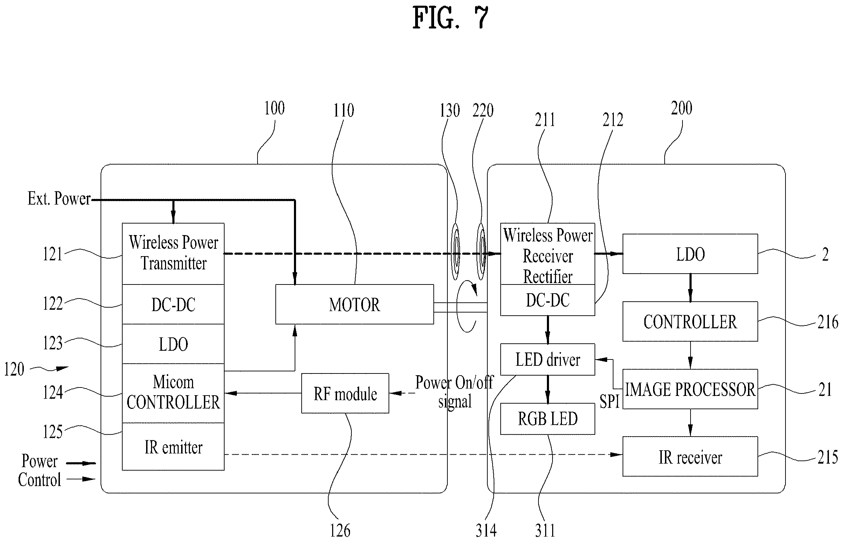

FIG. 7 is a block diagram of the rotatable display device according to the first embodiment of the present disclosure.

Hereinafter, the configuration for driving the rotatable display device will be described briefly with reference to FIG. 7.

First, a driving circuit 210 may be mounted to the fixed unit 100. The driving circuit 120 may include a power supply. The driving circuit 120 may include a wireless power transmitter 121, a DC-DC converter 122, and a voltage generator 123 for supplying individual voltages.

External power may be supplied to the driving circuit 120 and the motor 110.

In addition, an RF module 126 may be provided at the fixed unit 100, so that the display may be driven in response to a signal transmitted from the outside.

Meanwhile, a means for sensing rotation of the rotary unit 200 may be provided at the fixed unit 100. Infrared radiation may be used to sense rotation. Accordingly, an IR emitter 125 may be mounted to the fixed unit 100, and an IR receiver 215 may be mounted to the rotary unit 200 at a position corresponding to the IR emitter 125.

In addition, a controller 124 may be provided at the fixed unit 100 in order to control the driving circuit 120, the motor 110, the IR emitter 125, and the RF module 126.

Meanwhile, the rotary unit 200 may include a wireless power receiver 211 for receiving a signal from the wireless power transmitter 121, a DC-DC converter 212, and a voltage generator (LDO) 213 for supplying individual voltages.

The rotary unit 200 may be provided with an image processor 216 in order to realize an image through the light-emitting element array using RGB data of an image to be displayed. The signal processed by the image processor 216 may be transmitted to the drivers 314 of the light source module, and thus an image may be realized.

In addition, a controller 214 may be mounted to the rotary unit 200 in order to control the wireless power receiver 211, the DC-DC converter 212, the voltage generator (LDO) 213, the IR receiver 215, and the image processor 216.

The image processor 216 may generate a signal for controlling light emission from the light sources of the light source module based on data of an image to be output. At this time, the data for light emission from the light source module may be internal data or external data.

The data stored in the internal device (the rotary unit 200) may be image data pre-stored in a storage device, such as a memory (an SD-card) mounted together with the image processor 216. The image processor 216 may generate a light emission control signal based on the internal data.

The image processor 216 may transmit control signals to the drivers 314 so that the first light-emitting element arrays 311, 321, 331, and 341 and the second light-emitting element arrays 351, 352, 353, and 354 display image data of a specific frame in a delayed manner.

Further, the image processor 216 may transmit control signals to the drivers 314 so that the first light-emitting element arrays 311, 321, 331, and 341 and the second light-emitting element arrays 351, 352, 353, and 354 are sequentially driven. Accordingly, when the light source module 300 rotates, the second light-emitting element arrays 351, 352, 353, and 354 may be driven at positions at which the first light-emitting element arrays 311, 321, 331, and 341 respectively corresponding thereto (adjacent thereto) are driven.

Meanwhile, the image processor 216 may receive image data from the fixed unit 100. At this time, external data may be output through an optical data transmission device, such as a photo coupler, or an RF-type data transmission device, such as a Bluetooth or Wi-Fi device.

In this case, as mentioned above, a means for sensing rotation of the rotary unit 200 may be provided. That is, the IR emitter 125 and the IR receiver 215 may be provided as a means for detecting the rotational position (speed) of the rotary unit 200, such as an absolute rotational position or a relative rotational position, in order to output light source data suitable for each rotational position (speed) during rotation of the rotary unit 200. Alternatively, this function may also be achieved using an encoder, a resolver, or a Hall sensor.

Meanwhile, data required to drive the display may be transmitted as a signal in an optical manner at low cost using the principle of a photo coupler. That is, if the fixed unit 100 and the rotary unit 200 are provided with a light emitter and a light receiver, reception of data is continuously possible even when the rotary unit 200 rotates. Here, the IR emitter 125 and the IR receiver 215 described above may be used to transmit data.

As described above, power may be transferred between the fixed unit 100 and the rotary unit 200 in a wireless power transfer (WPT) manner.

Wireless power transfer enables the supply of power without connection of a wire using a resonance phenomenon of a coil.

To this end, the wireless power transmitter 121 may convert power into an RF signal of a specific frequency, and a magnetic field generated by current flowing through the transmission coil 130 may generate an induced current in the reception coil 220.

At this time, the natural frequency of the coil and the transmission frequency for transferring actual energy may differ from each other (a magnetic induction method).

Meanwhile, the resonant frequencies of the transmission coil 130 and the reception coil 220 may be the same (a magnetic resonance method).

The wireless power receiver 211 may convert the RF signal input from the reception coil 220 into direct current, and may transmit required power to a load.

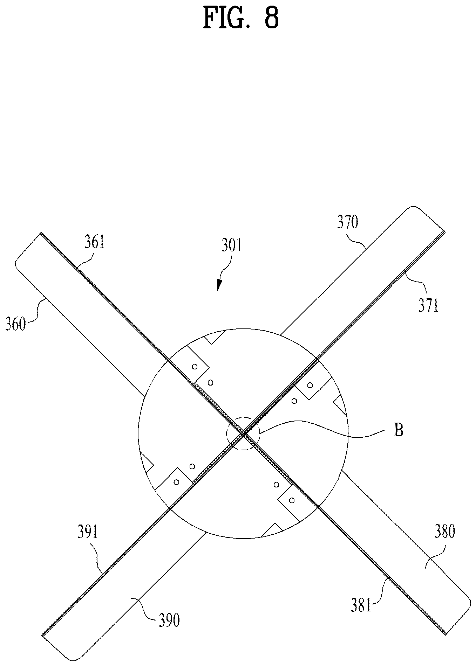

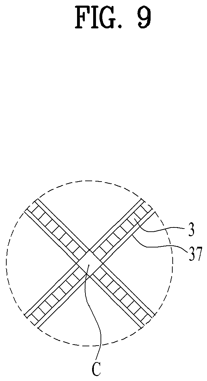

FIG. 8 is a plan view of a light source module of a rotatable display device according to a second embodiment of the present disclosure, and FIG. 9 is an enlarged view of portion B in FIG. 8.

Referring to FIG. 8, a light source module 303 is formed such that light-emitting element arrays 361, 371, 381, and 391 are respectively disposed on four panels 360, 370, 380, and 390. In this case, the light-emitting element arrays 361, 371, 381, and 391 extend to a center portion B.

A circular-shaped rotatable display device includes a plurality of light source modules, and it is necessary to secure space having a certain size in order to mechanically assemble the light source modules.

This space may include space formed when attaching light sources (LED chips, LED packages, or the like) to a panel. In addition, it is necessary to secure space required for a task between the outer periphery of a printed circuit board (panel) and light sources. That is, minimum space required for mounting of LEDs onto the printed circuit board is necessary. In addition, space may be formed by assembly of the light source modules.

For this reason, a dead zone having a certain size, in which no image is displayed, is present at the center point of the rotatable display device.

That is, referring to FIG. 9, it can be seen that a dead zone C is generated at the center point, at which the panels (the printed circuit boards) meet, due to the space mentioned above.

FIG. 9 illustrates an example in which a dead zone is generated at a portion at which the panels are bonded to each other. Light-emitting elements 375 are arranged in a row inside a protective portion 373 on the panel, which is implemented as a printed circuit board. A dead zone is generated due to space formed by assembly of the light source modules.

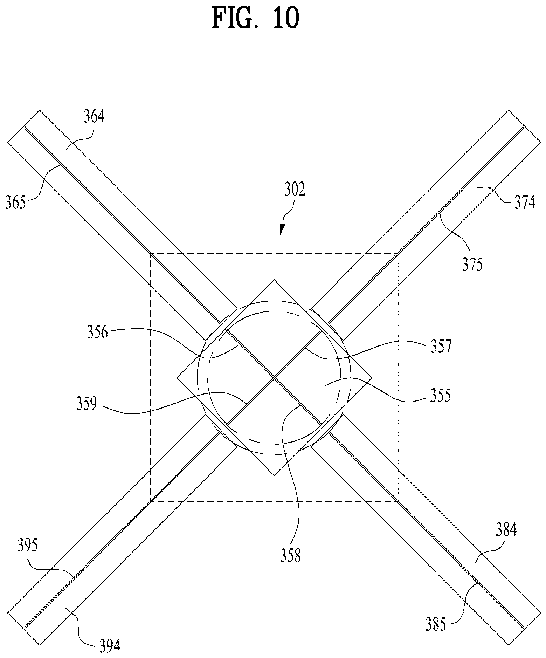

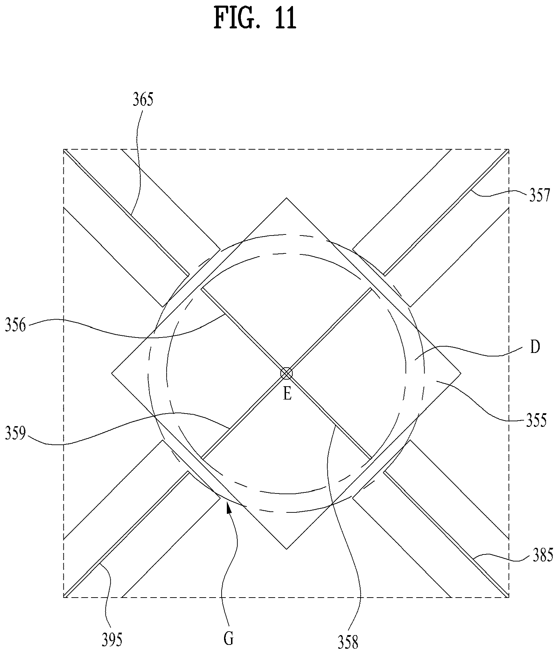

FIG. 10 is a plan view of a light source module of a rotatable display device according to a third embodiment of the present disclosure, and FIG. 11 is an enlarged view of the center portion in FIG. 10.

Referring to FIG. 10, a light source module 304 is formed such that first light-emitting element arrays 365, 375, 385, and 395 are respectively disposed on four panels 364, 374, 384, and 394.

In addition, a center panel 355 is disposed inwards further than the four panels 364, 374, 384, and 394, and second light-emitting element arrays 356, 357, 358, and 359 are disposed on the center panel 355 in the same direction as the first light-emitting element arrays 365, 375, 385, and 395.

Referring to FIG. 11, it can be seen that a predetermined gap G is present between the first light-emitting element arrays 365, 375, 385, and 395 and the second light-emitting element arrays 356, 357, 358, and 359.

This gap may be generated by the above-described space, that is, any one of the space formed when attaching the light sources (LED chips, LED packages, or the like) to the panel, the space required for a task between the outer periphery of the printed circuit board (panel) and the light sources, and the space formed by assembly of the light source modules.

Therefore, it can be seen that, when an afterimage display is implemented using the rotatable display device according to the second embodiment, a dead zone D is generated due to the gap G between the first light-emitting element arrays 365, 375, 385, and 395 and the second light-emitting element arrays 356, 357, 358, and 359.

When the separate second light-emitting element arrays 356, 357, 358, and 359 are provided using the center panel 355, as described above, no dead zone is generated at the center portion E, but the dead zone D may be generated due to the gap G between the light source modules.

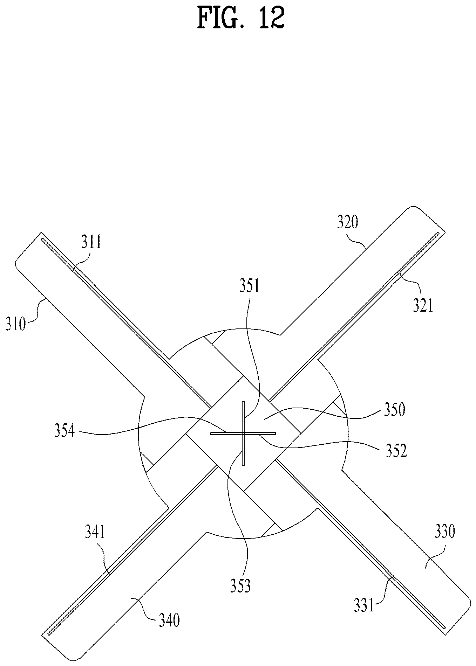

FIG. 12 is a plan view of the light source module of the rotatable display device according to the first embodiment of the present disclosure. FIG. 12 illustrates substantially the same light source module as that illustrated in FIG. 1.

Referring to FIG. 12, the light source module 300 may include a first light source module 301, which is implemented as one or more bar-shaped panels 310, 320, 330, and 340, which are disposed radially, and a second light source module 302, which is located between the first light source module 301 and the center of rotation of the rotary unit 200.

The direction in which the first light-emitting element arrays 311, 321, 331, and 341 are disposed may differ from the direction in which the second light-emitting element arrays 351, 352, 353, and 354 are disposed.

That is, as illustrated, the first light source module 301 may include one or more bar-shaped panels 310, 320, 330, and 340, which are disposed radially around the center of rotation, and first light-emitting element arrays 311, 321, 331, and 341, which are respectively disposed on the panels 310, 320, 330, and 340 in the longitudinal direction of each panel.

In addition, the second light source module 302 may include a center panel 350, which is located inwards further than the first light source module 301, and second light-emitting element arrays 351, 352, 353, and 354, which are disposed on the center panel 350.

In this case, the direction in which the second light-emitting element arrays 351, 352, 353, and 354 are disposed may be misaligned at a predetermined angle from the direction in which the first light-emitting element arrays 311, 321, 331, and 341 are disposed based on the center of rotation.

In the above manner, the first light source module 301 may be constituted by the panels 310, 320, 330, and 340, on which the light-emitting element arrays 311, 321, 331, and 341 are disposed.

In this case, the predetermined angle may be half the angle between two adjacent first light-emitting element arrays. That is, the second light-emitting element array 351 may be located between the first light-emitting element arrays 311 and 321 disposed on the first panel 310 and the second panel 320.

Since the two first light-emitting element arrays 311 and 321 form an angle of 90 degrees therebetween, the second light-emitting element array 351 may be located at a point corresponding to an angle of 45 degrees, which is half 90 degrees.

Meanwhile, the number of second light-emitting element arrays may correspond to the number of first light-emitting element arrays. That is, since four panels 310, 320, 330, and 340 and four first light-emitting element arrays 311, 321, 331, and 341 corresponding thereto are provided, four second light-emitting element arrays 351, 352, 353, and 354 may be provided on the center panel 350.

The length of each of the second light-emitting element arrays 351, 352, 353, and 354 may correspond to the distance between the center of rotation of the rotary unit 200 and each of the first light-emitting element arrays 311, 321, 331, and 341. In this case, the gap described above may not be present between the first light-emitting element arrays 311, 321, 331, and 341 and the second light-emitting element arrays 351, 352, 353, and 354.

That is, none of the space formed when attaching the light sources (LED chips, LED packages, or the like) to the panel, the space required for a task between the outer periphery of the printed circuit board (panel) and the light sources, and the space formed by assembly of the light source modules may be present between the first light-emitting element arrays 311, 321, 331, and 341 and the second light-emitting element arrays 351, 352, 353, and 354.

Meanwhile, the second light-emitting element arrays 351, 352, 353, and 354 may be driven so as to emit light at the same rotational positions as the first light-emitting element arrays 311, 321, 331, and 341. Therefore, no dead zone is generated at the center portion and between the first light-emitting module and the second light-emitting module.

In some embodiments, the center panel 350 may be integrally formed with any one of the panels constituting the first light-emitting module. FIG. 12 illustrates an example in which the center panel 350 is integrally formed with the fourth panel 340.

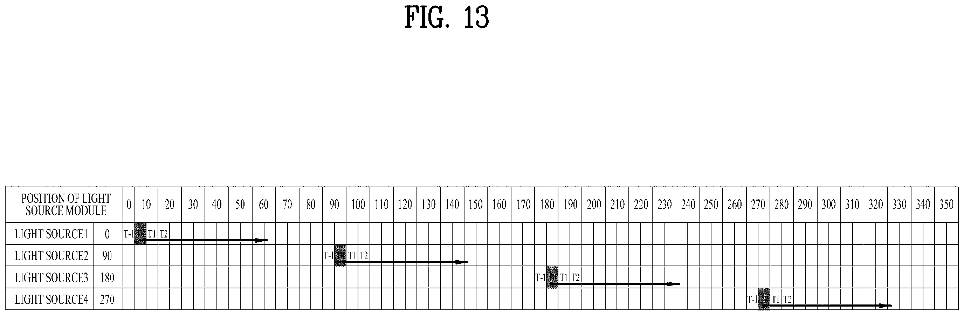

FIG. 13 is a timing chart showing the timing at which the light-emitting modules are driven in the third embodiment of the present disclosure.

In the timing chart, the positions of the light source modules are represented by angles, and four light source modules (light source 1, light source 2, light source 3, and light source 4) are illustrated. Because four light source modules are arranged, the light source modules are set to be located at positions corresponding to 0 degrees, 90 degrees, 180 degrees, and 270 degrees.

In this case, each of the light source modules may emit light at the time point T0. For example, when the light source module rotates and is located at a position corresponding to 10 degrees, the light source 1 may emit light, and light emission may be maintained for a predetermined amount of time. Thereafter, when the light source module is located at a position corresponding to 90 degrees, the light source 2 may emit light, and light emission may be maintained for a predetermined amount of time.

In this way, as the light source modules sequentially emit light, an afterimage is generated, and one frame of image is displayed each time the light source modules make one rotation. In this case, when images are displayed at a predetermined rate or higher, a viewer may recognize the same as a continuous image. For example, when images are implemented at a rate of 60 frames per second (60 Hz), a viewer may recognize the same as a seamless smooth image.

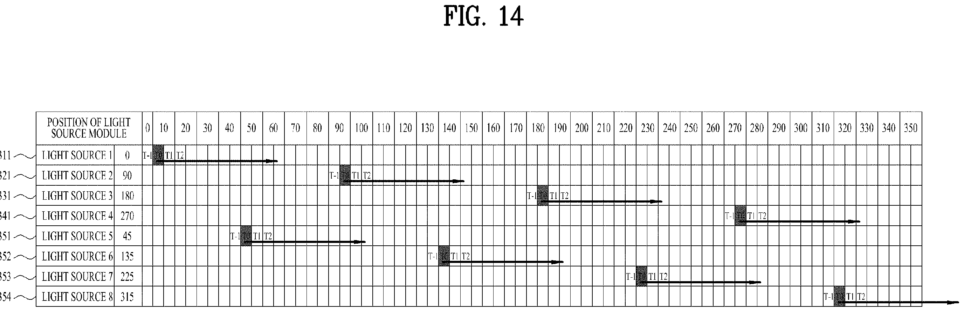

FIG. 14 is a timing chart showing the timing at which the light-emitting modules are driven in the first embodiment of the present disclosure.

In the timing chart, the positions of the light source modules are represented by angles, and four first light source modules (light source 1, light source 2, light source 3, and light source 4; 311, 321, 331, and 341) and four second light source modules (light source 5, light source 6, light source 7, and light source 8; 351, 352, 353, and 354) are illustrated.

Because four light source modules are arranged, the first light source modules 311, 321, 331, and 341 are set to be respectively located at positions corresponding to 0 degrees, 90 degrees, 180 degrees, and 270 degrees. Further, the second light source modules 351, 352, 353, and 354 are set to be respectively located at positions corresponding to 45 degrees, 135 degrees, 225 degrees, and 315 degrees.

In this case, each of the light source modules may emit light at the time point T0. For example, when the light source module rotates and is located at a position corresponding to 10 degrees, the light source 1 may emit light, and light emission may be maintained for a predetermined amount of time. Thereafter, when the light source module is located at a position corresponding to 90 degrees, the light source 2 may emit light, and light emission may be maintained for a predetermined amount of time.

Meanwhile, the light source 5 may emit light at a position between the light source 1 and the light source 2. That is, the light source 5 may emit light after/within a predetermined time period after light emission from the light source 1.

In this way, as the light source modules sequentially emit light, an afterimage is generated, and one frame of image is displayed each time the light source modules make one rotation. In this case, when images are displayed at a predetermined rate or higher, a viewer may recognize the same as a continuous image. For example, when images are implemented at a rate of 60 frames per second (60 Hz), a viewer may recognize the same as a seamless smooth image.

Although the second light source modules 351, 352, 353, and 354 are disposed in different directions from the first light source modules 311, 321, 331, and 341, it may be possible to smoothly display each frame of image by adjusting the light emission timing.

Further, the second light source modules 351, 352, 353, and 354 and the first light source modules 311, 321, 331, and 341 may be provided such that there is substantially no gap between the light sources.

As described above, according to the present disclosure, an additional light source module (the second light source module) is disposed at the center of the rotatable display device, and light sources are disposed in specific directions in this light source module, thereby preventing the generation of a dead zone at the center of the light source module and preventing disconnection between pixels at a connection portion of the light source module.

The above description is merely illustrative of the technical idea of the present disclosure. Those of ordinary skill in the art to which the present disclosure pertains will be able to make various modifications and variations without departing from the essential characteristics of the present disclosure.

Therefore, embodiments disclosed in the present disclosure are not intended to limit the technical idea of the present disclosure, but to describe the same, and the scope of the technical idea of the present disclosure is not limited by such embodiments.

The scope of protection of the present disclosure should be interpreted by the claims below, and all technical ideas within the scope equivalent thereto should be construed as being included in the scope of the present disclosure.

### INDUSTRIAL APPLICABILITY

The present disclosure may provide a rotatable display device using a light-emitting diode (LED), which is a semiconductor light-emitting element.

## Claims

1. A rotatable display device using a light-emitting element, the rotatable display device comprising:
a fixed unit comprising a motor;
a rotary unit located on the fixed unit, the rotary unit being configured to be rotated by the motor;
a first light source module comprising one or more bar-shaped panels, coupled to the rotary unit and disposed radially, and first light-emitting element arrays, respectively disposed on the panels in a longitudinal direction of the panels; and
a second light source module comprising a center panel, located inwards further than the first light source module, and second light-emitting element arrays, disposed on the center panel,
wherein the first light-emitting element arrays are disposed in different directions from the second light-emitting element arrays.

2. The rotatable display device of claim 1, wherein each of the second light-emitting element arrays is located between two adjacent ones of the first light-emitting element arrays.

3. The rotatable display device of claim 2, wherein each of the second light-emitting element arrays is located at a position corresponding to half an angle between two adjacent ones of the first light-emitting element arrays.

4. The rotatable display device of claim 1, wherein the second light-emitting element arrays are provided in a number corresponding to a number of the first light-emitting element arrays.

5. The rotatable display device of claim 1, wherein each of the second light-emitting element arrays has a length corresponding to a distance between a center of the rotary unit and each of the first light-emitting element arrays.

6. The rotatable display device of claim 1, wherein the fixed unit and the rotary unit are electrically connected to each other through a wireless power transfer structure.

7. The rotatable display device of claim 6, wherein the wireless power transfer structure comprises:
a wireless power transmitter provided at the fixed unit;
a transmission coil connected to the wireless power transmitter;
a reception coil located at a position facing the transmission coil; and
a wireless power receiver connected to the reception coil.

8. The rotatable display device of claim 1, wherein the first light source module and the second light source module comprise drivers configured to drive the first light-emitting element arrays and the second light-emitting element arrays.

9. The rotatable display device of claim 8, wherein the drivers are provided on surfaces of the panels so as to be located opposite the first light-emitting element arrays and the second light-emitting element arrays.

10. The rotatable display device of claim 8, further comprising an image processor configured to transmit control signals to the drivers.

11. The rotatable display device of claim 10, wherein the image processor transmits signals controlling the first light-emitting element arrays and the second light-emitting element arrays to display image data of a specific frame in a delayed manner.

12. The rotatable display device of claim 11, wherein the image processor transmits signals controlling the first light-emitting element arrays and the second light-emitting element arrays to be sequentially driven.

13. A rotatable display device using a light-emitting element, the rotatable display device comprising:
a fixed unit comprising a motor;
a rotary unit located on the fixed unit, the rotary unit being configured to be rotated by the motor;
a first light source module comprising one or more bar-shaped panels, coupled to the rotary unit and disposed radially, and first light-emitting element arrays, respectively disposed on the panels in a longitudinal direction of the panels; and
a second light source module comprising a center panel, located inwards further than the first light source module, and second light-emitting element arrays disposed on the center panel,
wherein the second light-emitting element arrays are disposed so as to be misaligned at a predetermined angle from the first light-emitting element arrays.

14. The rotatable display device of claim 13, wherein the predetermined angle corresponds to half an angle between two adjacent ones of the first light-emitting element arrays.

15. The rotatable display device of claim 13, wherein the second light-emitting element arrays are provided in a number corresponding to a number of the first light-emitting element arrays.

16. The rotatable display device of claim 13, wherein each of the second light-emitting element arrays has a length corresponding to a distance between a center of the rotary unit and each of the first light-emitting element arrays.

17. The rotatable display device of claim 13, wherein the fixed unit and the rotary unit are electrically connected to each other through a wireless power transfer structure.

18. The rotatable display device of claim 13, wherein the first light source module and the second light source module comprise:
drivers configured to drive the first light-emitting element arrays and the second light-emitting element arrays; and
an image processor configured to transmit control signals to the drivers.

19. The rotatable display device of claim 18, wherein the image processor transmits signals controlling the first light-emitting element arrays and the second light-emitting element arrays to display image data of a specific frame in a delayed manner.

20. The rotatable display device of claim 18, wherein the image processor transmits signals controlling the first light-emitting element arrays and the second light-emitting element arrays to be sequentially driven.
